Europäisches Patentamt

European Patent Office

Office européen des brevets

(19)

(11) Publication number: **0 067 799**

**A1**

(12) **EUROPEAN PATENT APPLICATION**

(21) Application number: **82830165.5**

(22) Date of filing: **10.06.82**

(51) Int. Cl.³: **B 01 D 1/04**

(30) Priority: **12.06.81 IT 4866681**

(43) Date of publication of application:
**22.12.82 Bulletin 82/51**

(84) Designated Contracting States:
**AT BE CH DE FR GB LI LU NL SE**

(71) Applicant: **McQuay Europa S.p.A.**
**Via Piani di Santa Maria 72**
**I-00040 Ariccia Roma(IT)**

(72) Inventor: **Capozio, Claudio**
**Viale dei Cerri 20**
**I-00040 Ariccia Roma(IT)**

(74) Representative: **Bazzichelli, Alfredo et al,**
**c/o Società Italiana Brevetti Piazza Poli 42**
**I-00187 Roma(IT)**

(54) Direct expansion evaporator, particularly for water refrigeration.

(57) A direct expansion evaporator of improved accessibility for cleaning purpose, comprises bundles of first tubes (2) of a comparatively large cross section, a bundle of second tubes (5) of comparatively narrow cross section being enclosed within each of said first tubes, and tube sheets (3, 4, 7, 8) and end covers (17, 18) forming flow passages equipped with partitions (23, 24) and inlet and outlet ports (21, 22) in order to provide a first flow path for the evaporating fluid which flows between the large (2) and narrow tubes (5) and a second flow path for water or the like to be refrigerated, which flows inside the narrow tubes countercurrently to the first flow path.

Fig.1

EP 0 067 799 A1

Croydon Printing Company Ltd.

McQUAY EUROPA S.p.A.

Direct expansion evaporator,
particularly for water refrigeration.

## Specification

This invention relates to a direct expansion evaporator
which, in contrast with similar well known evaporators,
is built and arranged so as to be easily accessible and
cleaned by conventional tools.

The present evaporator shows a particular utility in the
refrigeration of water and the like in heat pumps and
refrigerating machines.

## Background of the invention

As it is well known, a water evaporator is a heat exchanger wherein one of two fluids performs an evaporative
process by absorbing heat from the other fluid (water or
a water solution), said other fluid undergoing a temperature decrease.

Said evaporators are usually utilized in refrigerators
wherein a fluid performs a thermodynamical cycle comprising,
among others, a condensation and an evaporation.

Water evaporators are divided into two classes: socalled
"flooded" evaporators and direct expansion evaporators.

Both of them comprise a bundle of usually horizontal tubes (preferably made of copper alloy) rigidly connected to a pair of tube sheets at the ends thereof. The bundle of tubes is in turn contained within a cylindrical shell, said tube sheets forming the base surfaces of said shell.

In the flooded evaporators, water flows inside said tubes, while the evaporating fluid flows outside the tubes between said tubes and the outer shell. A liquid phase of the evaporating fluid is thus present in the lower part of the shell and a vapor phase in the upper part.

The evaporating fluid, as in the liquid phase, always contains a certain amount of oil coming from the lubricating system or the like, which, as it fails to evaporate, remains entrapped in the evaporator.

This is a major drawback in evaporators of said type, which have to be provided with a device for removing said lubricating oil.

In direct expansion evaporators the evaporating fluid flows inside the tubes and it moves at a given flow rate or speed.

Again a certain amount of oil will accumulate as the fluid, in which said oil was dissolved, evaporates; however, said oil in the liquid phase will be easily entrained with the vapor flowing together with said liquid inside the tubes. In this arrangement, water flows between tubes and shell, following a sinuous path formed by means of circular partitions spaced at intervals. Water flows therefore in a direction on the whole transversal with respect to the copper tubes, reversing at intervals its direction by 180°. The copper tubes are positioned in a triangular pattern or in any other compact arrangement so that the gaps through which the water flows are not easily accessible. For this reason in such evaporators an absolutely clean water or a closed circuit for the water is required to be used, as the continuous settling of substances dispersed in said water, also aided by the sinuosity of said path, could lead even to a complete choking of the passage.

Moreover, a cleaning of the evaporator, although necessary, can hardly be effected by mechanical means as the inner areas thereof are of difficult accessibility.

## Summary of the invention

The main object of this invention is to remove the above mentioned drawbacks by providing an evaporator which appears in its operating features to be intermediate between a direct expansion and a flooded evaporator.

The evaporator according to the invention is built up of first metal tubes (steel, copper or the like) having a diameter of moderate size, usually smaller than 100 mm and larger than 50 mm, within which second tubes of narrower diameter (5 to 20 mm) are placed, in such a number as to uniformly fill the inner cross section of the first tube enclosing said second tubes. Water flows in the narrow second tubes, while the evaporating fluid flows in the room between said narrow tubes (which, as an example, are seven in number) and the inner wall of the enclosing first tube.

The flow passage cross section for the evaporating fluid is so established that said fluid has a sufficient flow rate to eliminate the drawbacks related to the oil entrapment in the conventional flooded evaporators. Water flows in the narrow tubes of circular cross section countercurrently to the evaporating fluid. Said narrow tubes can be easily and readily serviced and cleaned by removing end covers which are demountably fixed to the respective tube sheet, thus eliminating the drawbacks of conventional direct expansion evaporators.

In order to increase the heat exchanging power, the narrow or inner tubes in which water flows, can be provided with fins on their outer surfaces which are in contact with the evaporating fluid.

Brief description of the drawings

The invention will be further illustrated in the following description of a preferred embodiment shown for an illustrative and not limitative purpose, with reference to the accompanying drawings, wherein:

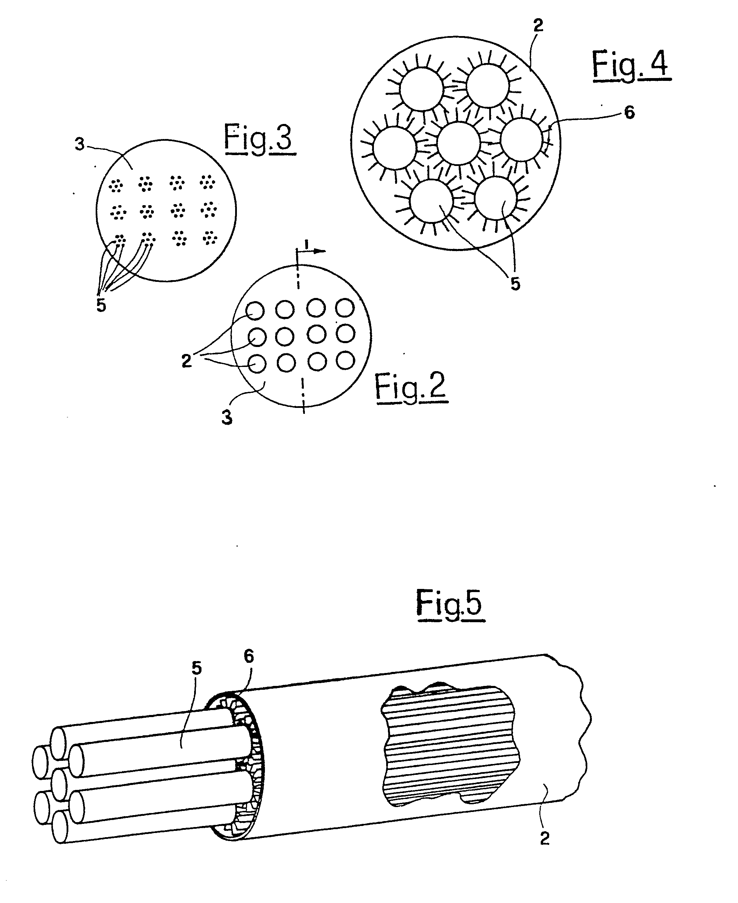

figure 1 is a partially broken, side sectional view of the evaporator according to the invention, generally taken on line I-I of figure 2;

figure 2 is a vertical section on line II-II of figure 1, showing an arrangement of the first tubes of a comparatively large.diameter with an associated tube sheet;

figure 3 is a vertical section on line III-III of figure
1 showing the arrangement of the second tubes of
comparatively narrow diameter;

figure 4 is a sectional view on line IV-IV of figure 1
of a large tube in which narrow tubes provided with fins
are contained; and

figure 5 is an isometric fragmentary view of an assembly
of a large tube enclosing a plurality of narrow tubes.

### The preferred embodiment

Referring to the drawings, there is generally indicated
in 1 a direct expansion evaporator according to the invention, which, in the embodiment as shown, comprises a bundle
of first tubes 2 open at both ends, having a comparatively
large cross section, for example a diameter from 50 to 100
mm, which are fixed in a well known way to respective inner
tube sheets 3, 4 at the ends thereof. Preferably, twelve
tubes 2 are provided.

Each of said tubes 2 encloses a plurality (seven, in the
illustrative embodiment) of second tubes 5 open at both
ends, having a comparatively narrow cross section, for
example a diameter from 5 to 20 mm.

In the illustrated embodiment, said narrow tubes 5 are
provided with fins 6 and are conventionally fixed to
respective outer tube sheets 7, 8 at the ends thereof.

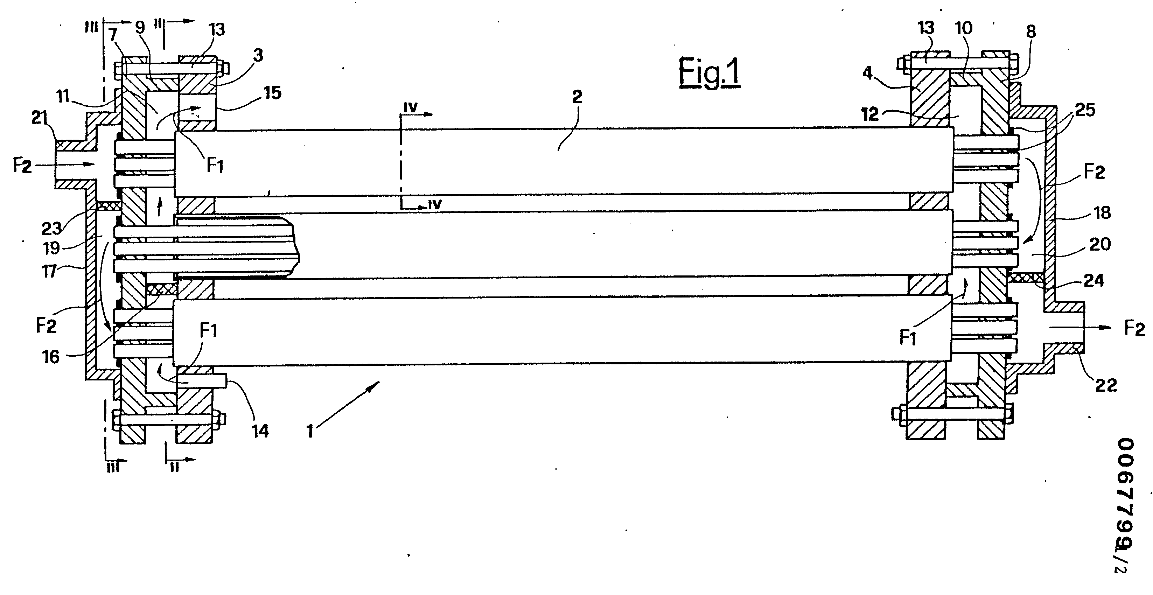

As shown in figure 1, the narrow tubes 5 project beyond both the ends of the large tubes 2 and the outer tube sheets 7 and 8 are spaced by means of peripheral walls 9, 10 from the adjacent, inner tube sheet 3, 4 of the narrow tubes 5, thus forming with said sheets 3, 4 two inner chambers or inner headers 11, 12.

Each pair of adjacent tube sheets 3, 7 and 4,8, respectively, are connected together in a demountable manner for example by means of peripheral bolts 13.

Tube sheet 3 has at the bottom an inlet port 14 for the evaporating fluid and at the top an outlet port 15 for the same fluid.

Header 11 is divided by a partition wall 16 so that the fluid entering through the port 14 is caused to flow from left to right (looking at figure 1) in the lower row of tubes 2 and from right to left in the upper rows of tubes 2, following the path indicated by arrows $F_1$, and finally to go out through the outlet port 15.

To each outer tube sheet 7, 8 of the narrow tubes 5, a cover 17 and 18 respectively is secured, preferably by screws (not shown), so as to form two end chambers or outer headers 19 and 20 respectively. The cover 17 has an upper port 2 for water inlet and cover 18 has a lower port 22 for water outlet.

Each of the outer headers 18, 20 is provided with a partition 23 and 24 respectively which divide the same into two sections.

Partitions 23, 24 are so positioned as to cause the water going in the inlet port 21 to pass through the narrow tubes 5 following a sinuous path, as indicated by arrows F2, countercurrently to the evaporating fluid (arrows F1), before going out of the evaporator through the outlet port 22.

It is obvious that the shape, arrangement and number of partitions and inlet and outlet ports can be suitably chosen according to necessity.

Furthermore the direct expansion evaporator herein illustrated as in a horizontal position, could also be set in an inclined or even vertical position with minor adjustments.

It is understood from the foregoing that servicing and cleaning of inner parts of the evaporator according to the invention, particularly of the narrow tubes 5 wherein the water flows, can be carried out with great ease simply by demounting the covers 17, 18 after unscrewing the respective screws which engage the outer tube sheets 7, 8. If required, also the outer tube sheets 7, 8 could be removed by unscrewing the bolts 13 for inspecting the large tubes 2. To the latter end, according to the invention, preferably the narrow tubes 5 are fixed to the respective outer tube sheets 7, 8 by means of discs 25 secured by screws to the outer tube sheets 7, 8, said discs 25 being provided with an annular seal or O-ring (not shown in detail) for coupling and tight-sealing the tubes 5 to the outer tube sheets 7,8.

It will be understood that the present invention is not restricted to the above illustrated embodiment as modifications and variations could be envisaged by those skilled in the art, all falling within the scope of the invention as claimed.

- 1 -

## Claims

1. A direct expansion evaporator, particularly for the refrigeration of water or the like in heat pumps and refrigerating machines, characterized by comprising:

a pair of inner tube sheets;

a bundle of first tubes open at both ends, of comparatively large cross section, fixed at their ends to said inner tube sheets;

bundles of second tubes open at both ends of comparatively narrow cross section, each one of said bundles of second narrow tubes being enclosed within one of said first large tubes, said second narrow tubes projecting out from said inner tube sheets;

a pair of outer tube sheets engaged with opposite ends of said bundles of second narrow tubes, adjacent outer and inner tube sheets forming an inner chamber therebetween in fluid communication with said first large tubes;

a cover demountably fixed to the outer side of each outer tube sheet, an outer chamber being formed therebetween in fluid communication with said second narrow tubes;

inlet and outlet means in said covers for providing a flow circuit for water to be refrigerated;

inlet and outlet means in said inner tube sheets for providing a flow circuit for the evaporating fluid; and partitions in said inner and outer chambers,

whereby a first sinuous flow path is provided for the evaporating fluid between said first large and second narrow tubes, and a second sinuous flow path is provided for water or the like inside said second narrow tubes countercurrently to said first flow path for the evaporating fluid.

2. An evaporator as claimed in claim 1, wherein said outer tube sheet is demountably secured to the adjacent inner tube sheet by means of bolts.

3. An evaporator as claimed in claim 1, wherein said narrow tubes are engaged to a respective outer tube sheet by sealing means demountably fixed to said outer tube sheet.

4. An evaporator as claimed in claim 1, wherein said first large tubes have a diameter size of 50 to 100 mm and said second narrow tubes have a diameter size of 5 to 20 mm.

5. An evaporator as claimed in claim 1, wherein said second narrow tubes are provided with fins for increasing the heat exchanging power.

6. An evaporator as claimed in claim 1, wherein said bundles of tubes are horizontally positioned and the flow direction of the evaporating fluid is from bottom to top, while the flow direction of the water or the like is
countercurrently from top to bottom.

———

Fig.1

Fig.3

Fig.4

Fig.2

Fig.5

European Patent Office

**EUROPEAN SEARCH REPORT**

EP 82 83 0165.5

## DOCUMENTS CONSIDERED TO BE RELEVANT

| Category | Citation of document with indication, where appropriate, of relevant passages | Relevant to claim |
|---|---|---|
| Y,A | FR - A3 - 2 448 703 (L'EQUIPEMENT INDU-STRIEL EN VERRES SPECIAUX) <br> * fig. 1 * | ..1,2 |
| P,Y | EP - A1 - 0 043 383 (RIEDEL KÄLTE- UND KLIMATECHNIK) <br> * claim 1; fig. 1, 4 * | 1 |
| A | EP - A1 - 0 021 210 (BAYER, BERTRAMS) <br> * fig. 1 * <br> & US - A - 4 274 910 | 1 |
| A | US - A - 1 520 069 (E. MONTI) <br> * fig. 1 * | 1 |
| A | DE - A - 2 238 045 (AQUA-CHEM) <br> * fig. 3 à 5 * <br> & GB - A - 1 395 378 | 3 |
| A | FR - A - 545 439 (E. ZAHM) <br> * fig. 5 * | 1 |

**CLASSIFICATION OF THE APPLICATION (Int. Cl. 3)**

B 01 D 1/04

**TECHNICAL FIELDS SEARCHED (Int.Cl. 3)**

B 01 D 1/00
B 01 D 1/04
F 25 B 39/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 30-08-1982 | KÜHN |

EPO Form 1503.1 06.78